# EUROPEAN PATENT SPECIFICATION

(11) **EP 0 376 976 B1**
(45) Date of publication and mention of the grant of the patent: **31.03.1993**
(21) Application number: 88908048.7
(22) Date of filing: 04.08.1988
(51) Int. Cl.: B05B 15/04, B05C 11/10, B05C 21/00, B29B 17/00, B29C 33/44

(54) **HOT-MELT ADHESIVE RECYCLING DEVICE AND METHOD**
VERFAHREN ZUR REZIRKULATION VON SCHMELZLEIM UND GIESSFORM ZUR AUSFÜHRUNG DES VERFAHRENS
PROCEDE ET DISPOSITIF DE RECYCLAGE DE COLLE THERMOFUSIBLE

(30) Priority: 07.08.1987 US 82474
(43) Date of publication of application: 11.07.1990
(73) Proprietor: Black & Decker Inc., Newark Delaware 19711 (US)
(72) Inventor: SPEER, Howard, D., Marriottsville, MD 21104 (US); SHORTT, Robert, A., Baltimore, MD 21230 (US)
(74) Representative: Lucas, Brian Ronald
(86) International application number: US8802655
(87) International publication number: WO8901366

(56) References cited:
- EP-A- 0 111 850
- DE-A- 2 550 792
- US-A- 2 712 224
- US-A- 3 679 167
- US-A- 3 712 777

## Description

### Technical Field

The present invention relates to a hot-melt material recycling device for the recovery of hot-melt material and the forming of the recovered material into solid preforms, to an apparatus for the recovery of hot-melt material, to a method for recovering hot-melt material and to a method of changing over from a first hot-melt material in a hot-melt dispensing apparatus to a second hot-melt material.

### Background Art

Hot-melt adhesive dispensing guns, commonly known as glue guns, have achieved widespread use in the consumer market where they are used to effect common household repairs. The guns typically include a body portion having an internal electric heater and an integral handle that is grasped by the user. Solid adhesive or caulking materials in the form of short, cylindrical sticks are loaded into the gun through an entry port and melted by the heater for discharge through a nozzle. The sticks are typically 5.1 cm (two inches) or 10.2 cm (four inches) in length and 12.7 mm (0.5 inches) in diameter. A typical gun has the internal capacity to accommodate the volumetric equivalent of two to four 5.1 cm sticks in a molten state for discharge through the nozzle. In order to change from one type of thermoplastic material, e.g., from a traditional adhesive to a caulking material, the contents of the gun must first be purged. This can be accomplished by loading the gun with two or three sticks of the desired material and continuously discharging the hot contents of the gun until the internal passages and cavities of the gun are purged of the former material and filled with the desired material. As can be appreciated, frequent changeover from one material to another is both time consuming and wasteful, and the inconvenience associated with a changeover limits the variety of materials that can be used with traditional hot-melt glue guns. While hot-melt adhesives can be fabricated in different compositions for different purposes, for example adhesives for adhering cloth, stone, metal, glass, etc., and caulks in different colours or compositions, the waste associated with the need to purge the prior contents of the gun represents a practical limit of the ability to market a wide variety of adhesives and caulk compositions.

US-A-2 712 224 and DE-A-25 50 792 disclose an ice tray comprising a holder and a plurality of cups for holding water whilst it is frozen. Each cup has a bottom, four sides and is open at the top.

### Disclosure of Invention

According to one aspect of the present invention there is provided a hot-melt material recycling device for the recovery of hot-melt material and the forming of the recovered material into solid preforms, the device comprising a hot-melt dispensing apparatus for receiving a solid hot-melt material preform, heating the preform to a flowable state, and dispensing the heated material therefrom; a flexible mould form for receiving the hot-melt material dispensed from the hot-melt dispensing apparatus and moulding the dispensed material into a hot-melt material preform suitable for reuse in the hot-melt dispensing apparatus; and a mould carrier for holding the flexible mould form.

Preferably, the flexible mould form comprises a wall portion having an interior surface and an exterior surface, the interior surface defining a cylindrical cavity about a longitudinally extending axis, the cylindrical cavity having an open end for receiving the dispensed hot-melt material and a closed end.

Advantageously, the wall portion has a longitudinally extending slit along a side thereof.

Preferably, the longitudinally extending slit is terminated at one end by a bore to relieve the stress at that end.

Advantageously, the longitudinally extending slit terminates intermediate the open end and closed end of the cylindrical cavity.

Preferably, the flexible mould form is provided with a peripheral flange which extends about the open end thereof.

Advantageously, the exterior surface of the wall portion of the mould form defines a conical surface of revolution about the longitudinally extending axis.

Preferably, the conical surface has an included angle of about 16^{o}.

Advantageously, the mould carrier comprises a base member including a cavity having an opening for receiving the flexible mould form, the cavity being shaped to receive the exterior surface of the flexible mould form.

Preferably the cavity is conical.

Advantageously, the cavity has another opening through which the flexible mould form is accessible.

Preferably, the cavity is shaped and dimensioned so that when said flexible mould form is placed in said cavity the longitudinal slit of said flexible mould form is constricted so as to seal the flexible mould form.

The present invention also provides an apparatus for the recovery of hot-melt material and the forming of the recovered material into solid preforms, said apparatus comprising a flexible mould form having a wall portion defining a cavity having an open end and a closed bottom end, the flexible mould being slit longitudinally along at least one side thereof from the open end to a location intermediate the open end and the bottom end; and a mould carrier for carrying the flexible mould form and including an open cavity shaped to receive an outer surface of the wall portion of the flexible mould form and to constrict the longitudinal slit to seal the flexible mould form.

Advantageously, an exterior surface of the wall portion defines a conical surface of revolution about a longitudinally extending axis.

Preferably, the conical surface has an included angle of about 16 ^{o}.

Advantageously, the slit is terminated by a bore for relieving stress.

Preferably, an inner surface of the wall portion defines a cylindrical cavity formed about a or the longitudinally extending axis.

Advantageously, the mould carrier comprises a base member including a conically shaped cavity having an opening for receiving the flexible mould form.

Preferably, the cavity has another opening through which the flexible mould form is accessible.

The present invention further provides a method for recovering hot-melt material, said method comprising the steps of dispensing residual hot-melt material contained in a hot-melt dispensing apparatus into a carrier-held flexible mould form having an internal cavity dimensioned so as to form a hot-melt preform stick; allowing the dispensed hot-melt material to cool sufficiently to a hardened condition; removing the mould form from the carrier; and deforming the flexible mould form to a degree sufficient to enable removal of the cooled preform stick from the flexible mould.

There is also provided a method of changing over from a first hot-melt material in a hot-melt dispensing apparatus to a second hot-melt material and recovering the first hot-melt material for subsequent reuse, the hot-melt dispensing apparatus of the type utilizing hot-melt material in solid stick form loaded through an entry port, said method comprising steps of loading hot-melt material of the second type in stick form through the entry port of the hot-melt dispensing apparatus and dispensing the heated and fluid residual hot-melt material of the first type contained in the hot-melt dispensing apparatus into a flexible mould form having an internal cavity dimensioned so as to form a hot-melt stick suitable for subsequent reuse in the hot-melt dispensing apparatus (50); cooling the dispensed hot-melt material of the first type to form a solid stick suitable for reuse in the hot-melt dispensing apparatus; and removing the solid stick of the first type from the flexible mould.

Preferably, the method includes the step of deforming the flexible mould form to a degree sufficient to enable removal of the solid stick therefrom.

### Brief Description of Drawings

For a better understanding of the present invention reference will now be made, by way of example, to the accompanying drawings, in which:-
FIG. 1 is a perspective view of a hot-melt recycling device in accordance with the present invention illustrating an exemplary four-stick mould form carrier;
Fig. 2 is a detailed cross-sectional view of a mould form taken along line 2-2 of FIG. 1; and
FIG. 3 is a vertically exploded view of a mould form removed from its carrier and a cast hot-melt material stick suitable for reuse in a hot melt dispensing gun.

### Best Mode for Carrying Out the Invention

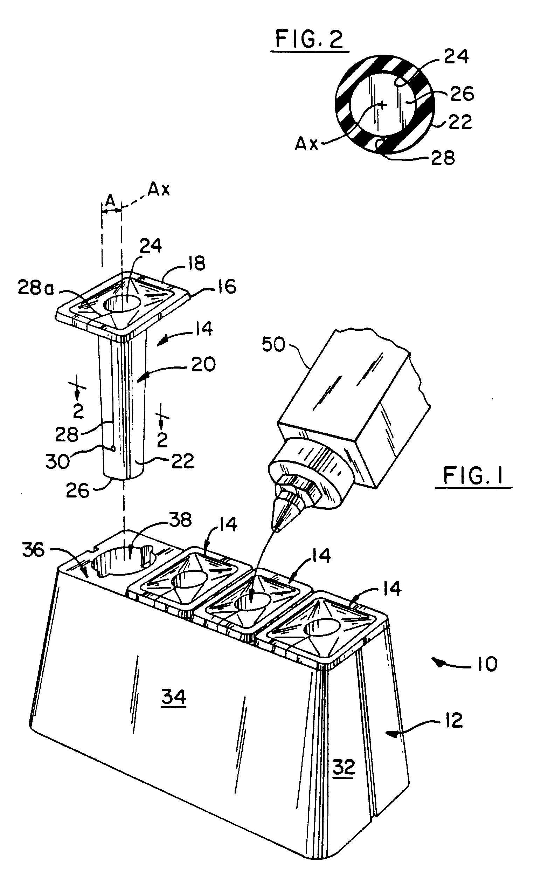

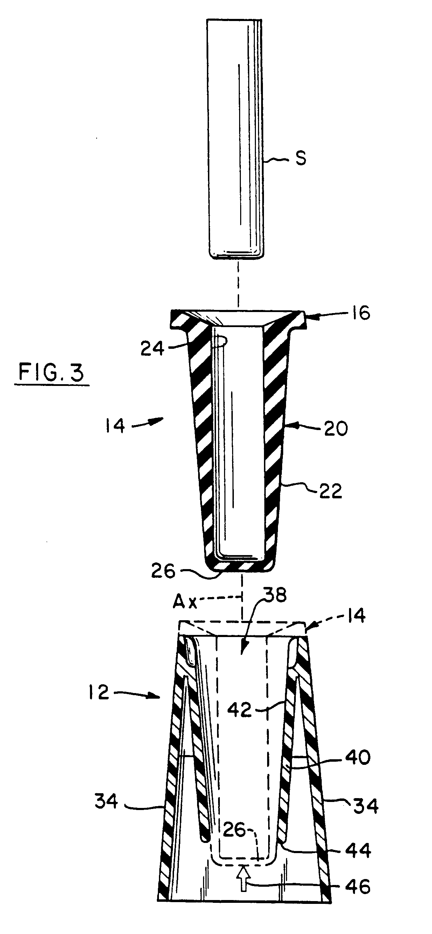

An exemplary hot-melt recycling device in accordance with the present invention is shown in FIG. 1 and designated generally therein by the reference character 10. As shown, the system 10 includes a base-like carrier 12 and a plurality of mould forms 14 of which one is shown removed from the carrier 12 for reasons of clarity. Each mould form 14 includes a generally rectangular flange 16 at one end defined by a peripheral rim 18. A tube-like portion 20 extends downwardly from the flange 16 and, as shown in FIGS. 2 and 3, includes a wall portion defined by an outer surface 22, an inner surface 24, and a closed bottom end 26. The outer surface 22 is a surface of revolution about the longitudinal axis Aₓ of the mould form 14 and is formed so as to taper relative to the axis Aₓ, an angle A of 8^{o} being preferred for a total included angle of 16^{o}. Accordingly, the outer surface 22 defines a truncated cone that converges in the direction of the bottom end 26. The inner surface 24 is formed as a cylindrical surface of revolution about the axis Aₓ and has a nominal diameter of about 12.7 mm (0.5 inches) and an overall length of about 5.1 cm (two inches), these dimensions being consistent with those used for preformed adhesive and caulk hot-melt sticks commonly used in consumer glue guns. The tube-like portion 20 is provided with a slit 28 on one side along a major portion of its length with a slit 28 terminating in a small, circular Stress-relief bore 30. The slit 28 is continuous through the flange 16 as indicated at 28a in FIG. 1. The mould form 14 is fabricated from a flexible, temperature resistant material that has a low surface adhesion to the range of available hot-melt materials. In general, a flexible RTV-type silicone is preferred, although other functionally equivalent materials are also suitable.

The carrier 12 includes end and side walls 32 and 34 and an upper support surface 36 that includes an opening 38 for each of the mould forms 14. As shown in the cross-sectional view of FIG. 3, the carrier 12 is formed with an interior, downwardly converging conical section 40 that has an inner surface 42 formed as a surface of revolution about the axis Aₓ that defines a cavity that is dimensioned to receive the mould form 14 in a resilient line-to-line fit. As shown in FIG. 3, the conical section 40 is open at its bottom end and has a rim 44 at its lower end that is dimensioned to allow the bottom end 26 of the mould form 14 to extend or project therebelow to allow each mould form 14 to be pushed out of the carrier 12 by application of a force in the direction of the arrow 46.

In order to use the device 10 of FIGS. 1 - 3 to recover and recycle hot-melt materials, the mould forms 14 are mounted in their carrier 12 and a hot-melt dispensing gun 50 is positioned to discharge its supply of hot-melt material, e.g., an adhesive or a caulk, in the open top of the mould form 14. The hot, viscous material enters the mould form 14 and accumulates to fill the cavity defined by the inner surface 24 and the bottom end 26 of the mould form 14. The heat conductivity of the typically silicone material is such to conserve heat and thus insure complete filling of the mould form 14. Since most commercially hot-melt dispensing guns have an internal capacity equivalent to four preformed sticks, the hot-melt dispensing gun 50 is used to fill all four mould forms 14. The hot material is then allowed to cool and solidify, a 30 to 60 minute cooling period at room temperature generally being sufficient. After the recovered material has solidified, the carrier 12 is grasped with one hand and one or more of the mould forms 14 are removed by applying a force, e.g., for example with the fingers of the other hand, to the bottom ends 26 of the mould forms 14 to push them upwardly and out of the carrier 12. Thereafter, the portions of the flange 16 on the opposite sides of the slit 28 are pulled to separate the flexible sides of the mould form 14 to allow a cast stick S (FIG. 3) to be pulled from the mould form 14. As can be appreciated, the stick S is properly dimensioned for reuse in the hot-melt dispensing gun 50.

The present invention advantageously addresses the problem of recycling hot-melt material purged from a glue gun when changing-over from one type of hot-melt material to another and eliminates the waste often associated with changeover.

## Claims

1. A hot-melt material recycling device for the recovery of hot-melt material and the forming of the recovered material into solid preforms (S), the device comprising a hot-melt dispensing apparatus (50) for receiving a solid hot-melt material preform (S), heating the preform (S) to a flowable state, and dispensing the heated material therefrom; a flexible mould form (14) for receiving the hot-melt material dispensed from the hot-melt dispensing apparatus (50) and moulding the dispensed material into a hot-melt material preform (S) suitable for reuse in the hot-melt dispensing apparatus (50); and a mould carrier (12) for holding the flexible mould form (14).

2. A recycling device according to Claim 1, characterized in that the flexible mould form (14) comprises a wall portion having an interior surface (24) and an exterior surface (22), the interior surface (24) defining a cylindrical cavity about a longitudinally extending axis (Aₓ), the cylindrical cavity having an open end for receiving the dispensed hot-melt material and a closed end (26).

3. A recycling device according to Claim 2, characterized in that the wall portion has a longitudinally extending slit (28) along a side thereof.

4. A recycling device according to Claim 3, characterized in that the longitudinally extending slit (28) is terminated at one end by a bore (30) to relieve the stress at that end.

5. A recycling device according to Claim 3 or 4, characterized in that the longitudinally extending slit (28) terminates intermediate the open end and closed end (26) of the cylindrical cavity.

6. A recycling device according to Claim 2, 3, 4 or 5, characterized in that the flexible mould form (14) is provided with a peripheral flange (16) which extends about the open end thereof.

7. A recycling device according to Claim 2, 3, 4, 5 or 6, characterized in that the exterior surface (22) of the wall portion of the mould form (14) defines a conical surface of revolution about the longitudinally extending axis (Aₓ).

8. A recycling device according to Claim 7, characterized in that the conical surface has an included angle of about 16^{o}.

9. A recycling device according to any preceding Claim, characterized in that the mould carrier (12) comprises a base member including a cavity having an opening (38) for receiving the flexible mould form (14), the cavity being shaped to receive the exterior surface (22) of the flexible mould form (14).

10. A recycling device according to Claim 9, characterized in that the cavity is conical.

11. A recycling device according to Claim 9 or 10, characterized in that the cavity has another opening through which the flexible mould form (14) is accessible.

12. A recycling device according to Claim 9, 10 or 11 when dependent directly or indirectly on Claim 3, characterized in that said cavity is shaped and dimensioned so that when said flexible mould form (14) is placed in said cavity the longitudinal slit (28) of said flexible mould form (14) is constricted so as to seal the flexible mould form (14).

13. An apparatus for the recovery of hot-melt material and the forming of the recovered material into solid preforms (S), said apparatus comprising a flexible mould form (14) having a wall portion defining a cavity having an open end and a closed bottom end (26), the flexible mould (14) being slit (28) longitudinally along at least one side thereof from the open end to a location intermediate the open end and the bottom end (26); and a mould carrier (12) for carrying the flexible mould form (14) and including an open cavity shaped to receive an outer surface (22) of the wall portion of the flexible mould form (14) and to constrict the longitudinal slit (28) to seal the flexible mould form (14).

14. An apparatus according to Claim 13, characterized in that an exterior surface (22) of the wall portion defines a conical surface of revolution about a longitudinally extending axis (Aₓ).

15. An apparatus according to Claim 14, characterized in that the conical surface has an included angle of about 16 ^{o}.

16. An apparatus according to any one of Claims 13 to 15, characterized in that the slit (28) is terminated by a bore (30) for relieving stress.

17. An apparatus according to any of Claims 13 to 16, characterized in that an inner surface (24) of the wall portion defines a cylindrical cavity formed about a or the longitudinally extending axis (Aₓ).

18. An apparatus according to any of Claims 13 to 17, characterized in that the mould carrier (12) comprises a base member including a conically shaped cavity having an opening (38) for receiving the flexible mould form (14).

19. An apparatus according to Claim 18, characterized in that the cavity has another opening through which the flexible mould form (14) is accessible.

20. A method for recovering hot-melt material, said method comprising the steps of dispensing residual hot-melt material contained in a hot-melt dispensing apparatus into a carrier-held flexible mould form (14) having an internal cavity dimensioned so as to form a hot-melt preform stick (S); allowing the dispensed hot-melt material to cool Sufficiently to a hardened condition; removing the mould form (14) from the carrier (12); and deforming the flexible mould form (14) to a degree sufficient to enable removal of the cooled preform stick (S) from the flexible mould (14).

21. A method of changing over from a first hot-melt material in a hot-melt dispensing apparatus (50) to a second hot-melt material and recovering the first hot-melt material for subsequent reuse, the hot-melt dispensing apparatus (50) of the type utilizing hot-melt material in solid stick (S) form loaded through an entry port (20), said method comprising the steps of loading hot-melt material of the second type in stick form through the entry port (20) of the hot-melt dispensing apparatus and dispensing the heated and fluid residual hot-melt material of the first type contained in the hot-melt dispensing apparatus (50) into a flexible mould form (14) having an internal cavity dimensioned so as to form a hot-melt stick (S) suitable for subsequent reuse in the hot-melt dispensing apparatus (50); cooling the dispensed hot-melt material of the first type to form a solid stick (S) suitable for reuse in the hot-melt dispensing apparatus (50); and removing the solid stick (S) of the first type from the flexible mould (14).

22. A method according to Claim 21, characterized in that it includes the step of deforming the flexible mould form (14) to a degree sufficient to enable removal of the solid stick (S) therefrom.

## Patentansprüche

1. Vorrichtung zum Rezirkulieren von Heißklebermaterial zur Wiedergewinnung von Heißklebermaterial und zum Formen des wiedergewonnenen Materials zu festen Vorformlingen (S), wobei die Vorrichtung aufweist: Einen Heißkleber-Ausgabeapparat (50) zur Aufnahme eines festen Heißklebermaterial-Vorformlings (S), zum Aufheizen des Vorformlings (S) in einen fließfähigen Zustand und zur Ausgabe des aufgeheizten Materials daraus; eine flexible Gußform (14) zur Aufnahme des aus dem Heißkleber-Ausgabeapparat (50) abgegebenen Heißklebermaterials und zum Formen des ausgegebenen Materials zu einem Heißklebermaterial-Vorformling (S), der zur Wiederverwendung in dem Heißkleber-Ausgabeapparat (50) geeignet ist; und einen Gußform-Träger (12) zum Halten der flexiblen Gußform (14).

2. Vorrichtung zum Rezirkulieren nach Anspruch 1, **dadurch gekennzeichnet**, daß die flexible Gußform (14) einen Wandbereich mit einer Innenfläche (24) und einer Außenfläche (22) aufweist, wobei die Innenfläche (24) einen zylindrischen Hohlraum um eine längsverlaufende Achse (Aₓ) definiert, wobei der zylindrische Hohlraum ein offenes Ende zur Aufnahme des ausgegebenen Heißklebermaterials und ein geschlossenes Ende (26) aufweist.

3. Vorrichtung zum Rezirkulieren nach Anspruch 2, **dadurch gekennzeichnet**, daß der Wandbereich einen längsverlaufenden Schlitz (28) entlang einer Seite aufweist.

4. Vorrichtung zum Rezirkulieren nach Anspruch 3, **dadurch gekennzeichnet**, daß der längsverlaufende Schlitz (28) an einem Ende durch eine Bohrung (30) abgeschlossen ist, um Spannungen an diesem Ende aufzunehmen.

5. Vorrichtung zum Rezirkulieren nach Anspruch 3 oder 4, **dadurch gekennzeichnet**, daß der längsverlaufende Schlitz (28) zwischen dem offenen Ende und dem geschlossenen Ende (26) des zylindrischen Hohlraums endet.

6. Vorrichtung zum Rezirkulieren nach Anspruch 2, 3, 4 oder 5, **dadurch gekennzeichnet**, daß die flexible Gußform (14) mit einem umlaufenden Flansch (16) versehen ist, der sich um dessen offenes Ende erstreckt.

7. Vorrichtung zum Rezirkulieren nach Anspruch 2, 3, 4, 5 oder 6, **dadurch gekennzeichnet**, daß die Außenfläche (22) des Wandbereiches der Gußform (14) eine konische Rotationsfläche um die längsverlaufende Achse (Aₓ) definiert.

8. Vorrichtung zum Rezirkulieren nach Anspruch 7, **dadurch gekennzeichnet**, daß die konische Fläche einen eingeschlossenen Winkel von etwa 16° aufweist.

9. Vorrichtung zum Rezirkulieren nach einem der vorhergehenden Ansprüche, **dadurch gekennzeichnet**, daß der Gußform-Träger (12) ein Bodenteil mit einem Hohlraum aufweist, der eine Öffnung (38) zur Aufnahme der flexiblen Gußform (14) aufweist, wobei der Hohlraum zur Aufnahme der Außenfläche (22) der flexiblen Gußform (14) geformt ist.

10. Vorrichtung zum Rezirkulieren nach Anspruch 9, **dadurch gekennzeichnet**, daß der Hohlraum konisch ist.

11. Vorrichtung zum Rezirkulieren nach Anspruch 9 oder 10, **dadurch gekennzeichnet**, daß der Hohlraum eine andere Öffnung aufweist, durch die die flexible Gußform (14) zugänglich ist.

12. Vorrichtung zum Rezirkulieren nach Anspruch 9, 10 oder 11, wenn direkt oder indirekt abhängig von Anspruch 3, **dadurch gekennzeichnet**, daß der Hohlraum so geformt und bemessen ist, daß, wenn die flexible Gußform (14) in dem Hohlraum plaziert ist, der längsverlaufende Schlitz (28) der flexiblen Gußform (14) zusammengedrück ist, um so die flexible Gußform (14) abzudichten.

13. Apparat zur Wiedergewinnung von Heißklebermaterial und zum Formen des wiedergewonnenen Materials zu festen Vorformlingen (S), wobei der Apparat aufweist: Eine flexible Gußform (14) mit einem Wandbereich, der einen Hohlraum mit einem offenen Ende und einem geschlossenen unteren Ende (26) aufweist, wobei die flexible Gußform (14) entlang wenigstens einer ihrer Seiten von dem offenen Ende bis zu einer Position zwischen dem offenen Ende und dem unteren Ende (26) geschlitzt (28) ist; und einen Gußform-Träger (12) zum Tragen der flexiblen Gußform (14), der einen offenen Hohlraum aufweist, welcher so geformt ist, um eine Außenfläche (22) des Wandbereichs der flexiblen Gußform (14) aufzunehmen und den längsverlaufenden Schlitz (28) zusammenzudrücken, um die flexible Gußform (14) abzudichten.

14. Apparat nach Anspruch 13, **dadurch gekennzeichnet**, daß eine Außenfläche (22) des Wandbereiches eine konische Rotationsfläche um eine längsverlaufende Achse (Aₓ) definiert.

15. Apparat nach Anspruch 14, **dadurch gekennzeichnet**, daß die konische Fläche einen eingeschlossenen Winkel von etwa 16° aufweist.

16. Apparat nach einem der Ansprüche 13 bis 15, **dadurch gekennzeichnet**, daß der Schlitz (28) durch eine Bohrung (30) zur Aufnahme von Spannungen abgeschlossen ist.

17. Apparat nach einem der Ansprüche 13 bis 16, **dadurch gekennzeichnet**, daß eine Innenfläche (24) des Wandbereiches einen zylindrischen Hohlraum definiert, der um eine oder die längsverlaufende Achse (Aₓ) geformt ist.

18. Apparat nach einem der Ansprüche 13 bis 17, **dadurch gekennzeichnet**, daß der Gußform-Träger (12) ein Bodenteil mit einem konisch geformten Hohlraum aufweist, der eine Öffnung (38) zur Aufnahme der flexiblen Gußform (14) aufweist.

19. Apparat nach Anspruch 18, **dadurch gekennzeichnet**, daß der Hohlraum eine andere Öffnung aufweist, durch die die flexible Gußform (14) zugänglich ist.

20. Verfahren zum Wiedergewinnen von Heißklebermaterial, welches Verfahren die Schritte aufweist: Ausgeben von restlichem Heißklebermaterial, welches in einem Heißkleber-Ausgabeapparat enthalten ist, in eine trägergehaltene flexible Gußform (14) mit einem inneren Hohlraum, der so bemessen ist, um eine Heißkleber-Vorformlingstange (S) zu formen; Abkühlenlassen des ausgegebenen Heißklebermaterials in einen ausgehärteten Zustand; Entfernen der Gußform (14) von dem Träger (12); und Verformen der flexiblen Gußform (14) in einem ausreichenden Maße, um die Entfernung der abgekühlten Vorformlingstange (S) aus der flexiblen Gußform (14) zu ermöglichen.

21. Verfahren zum Wechseln von einem ersten Heißklebermaterial in einem Heißkleber-Ausgabeapparat (50) auf ein zweites Heißklebermaterial und zum Wiedergewinnen des ersten Heißklebermaterials zur späteren Wiederverwendung, wobei der Heißkleber-Ausgabeapparat (50) von dem Typ ist, der in Form von festen Stangen (S) durch einen Eingabekanal (20) geladenes Heißklebermaterial verwendet, wobei das Verfahren die Schritte aufweist: Laden von Heißklebermaterial des zweiten Typs in Stangenform durch den Eingabekanal (20) des Heißkleber-Ausgabeapparates und Ausgeben des erhitzten und flüssigen restlichen Heißklebermaterials des ersten Typs, das in dem Heißkleber-Ausgabeapparat (50) enthalten ist, in eine flexible Gußform (14), die einen so abgemessenen inneren Hohlraum aufweist, um eine für die nachfolgende Wiederverwendung in dem Heißkleber-Ausgabeapparat (50) geeignete Heißkleberstange (S) zu formen; Abkühlen des ausgegebenen Heißklebermaterials des ersten Typs, um eine zur Wiederverwendung in dem Heißkleber-Ausgabeapparat (50) geeignete feste Stange (S) zu bilden; und Entfernen der festen Stange (S) des ersten Typs aus der flexiblen Gußform (14).

22. Verfahren nach Anspruch 21, **dadurch gekennzeichnet**, daß es den Schritt enthält, die flexible Gußform (14) in einem ausreichenden Maße zu verformen, um die Entfernung der festen Stange (S) daraus zu ermöglichen.

## Revendications

1. Un dispositif de recyclage de matériaux thermofusibles pour la récupération de matériaux thermofusibles et la mise en forme du matériau récupéré en préformes solides (S), le dispositif comprenant un appareil de distribution du matériau thermofusible (50) pour recevoir une préforme de matériau thermofusible solide (S), pour chauffer la préforme (S) pour obtenir un état coulant, et distribuer le matériau chauffé à partir de celui-ci ; une forme de moule souple (14) pour recevoir le matériau thermofusible distribué à partir de l'appareil de distribution de matériau thermofusible (50) et mouler en une préforme de matériau thermofusible (S) appropriée pour être réutilisée dans l'appareil de distribution de matériau thermofusible (50); et un support de moule (12) servant à maintenir la forme de moule souple (14).

2. Un dispositif de recyclage selon la Revendication 1, caractérisé en ce que la forme de moule souple (14) comprend une partie de paroi ayant une surface interne (24) et une surface externe (22), la surface interne (24) définissant une cavité cylindrique autour d'un axe s'étendant longitudinalement (Aₓ), la cavité cylindrique ayant une extrémité ouverte pour recevoir le matériau thermofusible distribué et une extrémité fermée (26).

3. Un dispositif de recyclage selon la Revendication 2, caractérisé en ce que la partie de paroi a une fente s'étendant longitudinalement (28) le long de son côté.

4. Un dispositif de recyclage selon la Revendication 3, caractérisé en ce que la fente s'étendant longitudinalement (28) s'interromp au niveau d'une extrémité par un alésage (30) servant à alléger la contrainte à cette extrémité.

5. Un dispositif de recyclage selon la Revendication 3 ou 4, caractérisé en ce que la fente s'étendant longitudinalement (28) se termine entre l'extrémité ouverte et l'extrémité fermée (26) de la cavité cylindrique.

6. Un dispositif de recyclage selon la Revendication 2,3,4 ou 5, caractérisé en ce que la forme de moule souple (14) est munie d'un rebord périphérique (16) qui s'étend autour de son extrémité ouverte.

7. Un dispositif de recyclage selon la Revendication 2,3,4,5 ou 6, caractérisé en ce que la surface externe (22) de la partie de paroi de la forme de moule (14) définit une surface conique de révolution autour de l'axe (Aₓ) s'étendant longitudinalement.

8. Un dispositif de recyclage selon la revendication 7, caractérisé en ce que la surface conique a un angle fermé d'environ 16°.

9. Un dispositif de recyclage selon l'une des revendications précédentes, caractérisé en ce que le support de moule (12) comprend un élément de base composé d'une cavité ayant une ouverture (38) pour recevoir la forme de moule souple (14), la forme de la cavité permettant de recevoir la surface externe (22) de la forme de moule souple (14).

10. Un dispositif de recyclage selon la Revendication 9, caractérisé en ce que la cavité est conique.

11. Un dispositif de recyclage selon la Revendication 9 ou 10, caractérisé en ce que la cavité a une autre ouverture au travers de laquelle la forme de moule souple (14) est accessible.

12. Un dispositif de recyclage selon la Revendication 9, 10 ou 11 lorsqu'elles dépendent directement ou indirectement de la Revendication 3, caractérisé en ce que ladite cavité est mise en forme et a des dimensions de sorte que lorsque ladite forme de moule souple (14) est placée dans ladite cavité, la fente longitudinale (28) de ladite forme de moule souple (14) est resserrée afin de fermer hermétiquement la forme de moule souple (14).

13. Un appareil pour la récupération de matériau thermofusible et pour former le matériau récupéré en préformes solides (S), ledit appareil comprenant une forme de moule souple (14) ayant une partie de paroi définissant une cavité avec une extrémité ouverte et une extrémité de fond fermée (26), le moule souple (14) étant fendu (28) longitudinalement le long d'au moins un de ses côtés à partir de l'extrémité ouverte vers un emplacement situé entre l'extrémité ouverte et l'extrémité de fond (26); et un support de moule (12) servant à soutenir la forme de moule souple (14) et comprenant une cavité ouverte ayant une forme permettant de recevoir une surface externe (22) de la partie de paroi de la forme de moule souple (14) et de resserrer la fente longitudinale (28) pour fermer hermétiquement la forme de moule souple (14).

14. Un appareil selon la Revendication 13, caractérisé en ce qu'une surface externe (22) de la partie de paroi définit une surface conique de révolution autour d'un axe s'étendant longitudinalement (Aₓ).

15. Un appareil selon la Revendication 14, caractérisé en ce que la surface conique a un angle fermé d'environ 16°.

16. Un appareil selon l'une des Revendication 13 à 15, caractérisé en ce que la fente (28) se termine par un alésage (30) pour alléger la contrainte.

17. Un appareil selon l'une des Revendications 13 à 16, caractérisé en ce qu'une surface interne (24) de la partie de paroi définit une cavité cylindrique formée autour d'un ou de l'axe (Aₓ) s'étendant longitudinalement.

18. Un appareil selon l'une des Revendications 13 à 17, caractérisé en ce que le support de moule (12) comprend un élément de base comprenant une cavité de forme conique ayant une ouverture (38) servant à recevoir la forme de moule souple (14).

19. Un appareil selon la Revendication 18, caractérisé en ce que la cavité a une autre ouverture au travers de laquelle la forme de moule souple (14) est accessible.

20. Un procédé de récupération de matériau thermofusible, ledit procédé comprenant les étapes consistant à distribuer le matériau résiduel thermofusible contenu dans un appareil de distribution de matériau thermofusible dans une forme de moule souple maintenue par un support (14) ayant une cavité interne dont les dimensions sont telles qu'elle forme un bâton de préforme de matériau thermofusible (S) ; permettre au matériau thermofusible distribué de refroidir suffisamment pour arriver à un état durci ; enlever la forme de moule (14) du support (12); et déformer la forme de moule souple (14) dans une mesure suffisante pour permettre le retrait du bâton de préforme refroidi (S) du moule souple (14).

21. Un procédé pour passer d'un premier matériau thermofusible dans un appareil de distribution de matériau thermofusible (50) à un second matériau thermofusible et pour récupérer le premier matériau thermofusible pour le réutiliser ensuite, l'appareil de distribution de matériau thermofusible (50) étant du type de ceux utilisant du matériau thermofusible sous forme de bâton solide (S) alimenté par au travers d'un orifice d'entrée (20), ledit procédé comprenant les étapes consistant à alimenter le matériau thermofusible du second type sous forme de bâton au travers de l'orifice d'entrée (20) de l'appareil de distribution de matériau thermofusible et distribuer le matériau thermofusible résiduel chauffé et fluide du premier type contenu dans l'appareil de distribution de matériau thermofusible (50) dans la forme de moule souple (14) ayant une cavité interne dont les dimensions permettent de former un bâton thermofusible (S) approprié pour une réutilisation subséquente dans l'appareil de distribution de matériau thermofusible (50) ; refroidir le matériau thermofusible distribué du premier type pour former un bâton solide (S) approprié pour être réutilisé dans l'appareil de distribution de matériau thermofusible (50) ; et enlever le bâton solide (S) du premier type du moule souple (14).

22. Un procédé selon la Revendication 21, caractérisé en ce qu'il comprend l'étape consistant à déformer la forme de moule souple (14) dans une mesure suffisante pour permettre le retrait du bâton solide (S) de celle-ci.
